# EUROPÄISCHE PATENTSCHRIFT

(11) **EP 3 890 994 B1**
(45) Veröffentlichungstag und Bekanntmachung des Hinweises auf die Patenterteilung: **13.09.2023**
(21) Anmeldenummer: 19800936.7
(22) Anmeldetag: 24.10.2019
(51) Int. Cl.: B60C 11/03

(54) **LAUFSTREIFENPROFIL EINES FAHRZEUGREIFENS**
TREAD PROFILE OF A VEHICLE TYRE
PROFIL DE BANDE DE ROULEMENT D'UN PNEU DE VÉHICULE

(30) Priorität: 07.12.2018 DE 102018221192
(43) Veröffentlichungstag der Anmeldung: 13.10.2021
(73) Patentinhaber: Continental Reifen Deutschland GmbH, 30165 Hannover (DE)
(72) Erfinder: BEHR, Ulrich, 30419 Hannover (DE)
(74) Vertreter: Continental Corporation
(86) Internationale Anmeldenummer: PCT/EP2019/078959
(87) Internationale Veröffentlichungsnummer: WO 2020/114672

(56) Entgegenhaltungen:
- EP-A1- 2 329 967
- EP-A1- 2 450 200
- WO-A1-2014/105502
- WO-A1-2015/051932

## Beschreibung

### Laufstreifenprofil eines Fahrzeugreifens

Die Erfindung betrifft ein Laufstreifenprofil eines Fahrzeugreifens mit wenigstens einem Profilband, welches nach radial außen von einer die Straßenkontaktoberfläche bildenden radial äußeren Oberfläche begrenzt wird, mit in der radial äußeren Oberfläche des Profilbandes ausgebildeten Vertiefungen, die in der radial äußeren Oberfläche vollständig von Gummimaterial des Profilbandes umschlossen sind, mit Vertiefungen, die aus zwei sich kreuzenden Längserstreckungsabschnitten ausgebildet sind.

Derartige Laufstreifenprofile sind bekannt.

Es ist bekannt, Fahrzeugluftreifen mit Laufstreifenprofilen mit Profilblockelementen, welche durch Querrillen voneinander getrennt sind, auszubilden. Dies ermöglicht gute Nässe- und Nassgriffeigenschaften durch Aufnahme und Ableitung des Wassers in die Querrillen. Allerdings gehen derartige Profilblockelementstrukturen mit Nachteilen hinsichtlich der Geräuschbildung einher. Sowohl die durch die Querrillen bedingten Kanten und deren Kantenlänge als auch die durch die Querrillen beeinträchtigte Stabilität der Profilblockelemente tragen zur Geräuschbildung bei.

Es sind auch radial erhabene Profilelemente mit Vertiefungen in der radial äußeren Oberfläche bekannt, die in der radial äußeren Oberfläche vollständig umschlossen sind und die zum Teil aus sich kreuzenden Erstreckungsabschnitten ausgebildet sind. Die bekannten Vertiefungen ermöglichen dabei eine mehr oder weniger gute Aufnahme von Wasser. Im Bereich der Kreuzungsabschnitte sind dabei üblicher Weise Instabilitäten ausgebildet, die unregelmäßigen Abrieb und noch unerwünschte Geräuschbildung begünstigen können.

Aus der WO 2015/051932 A1 ist ein Laufstreifenprofil gemäß den Merkmalen des Oberbegriffs bekannt.

Der Erfindung liegt die Aufgabe zugrunde, ein Laufstreifenprofil bereitzustellen mit einer verbesserten Lösung des Zielkonfliktes der Wasseraufnahme bzw. der Ableitung des Wassers aus dem Profil und der Geräuschbildung bei günstigem regelmäßigen Abriebsverhalten.

Die Aufgabe wird erfindungsgemäß durch die Ausbildung eines Laufstreifenprofils eines Fahrzeugreifens mit wenigstens einem Profilband, welches nach radial außen von einer die Straßenkontaktoberfläche bildenden radial äußeren Oberfläche begrenzt wird, mit in der radial äußeren Oberfläche des Profilbandes ausgebildeten Vertiefungen, die in der radial äußeren Oberfläche vollständig von Gummimaterial des Profilbandes umschlossen sind, mit Vertiefungen, die aus zwei sich kreuzenden Längserstreckungsabschnitten ausgebildet sind, gemäß den Merkmalen von Anspruch 1 gelöst, bei dem der erste der beiden Längserstreckungsabschnitte außerhalb seines Kreuzungsbereichs mit dem zweiten Längserstreckungsabschnitt mit einer geringeren Tiefe ausgebildet ist als der zweite Längserstreckungsabschnitt in dessen über die Kreuzung hinweg erstrecktem Erstreckungsabschnitt, wobei der erste Längserstreckungsabschnitt beiderseits des zweiten Längserstreckungsabschnitts jeweils ausgehend von dem jeweiligen Erstreckungsende des ersten Längserstreckungsabschnitts längs seiner Erstreckung bis zur an der Kreuzung ausgebildeten Einmündung in den zweiten Längserstreckungsabschnitt mit in der radial äußeren Oberfläche kontinuierlich zunehmender Breite ausgebildet ist.

Die Ausbildung ermöglicht durch die Ausbildung der Vertiefungen ohne direkte Verbindung zu anderen Negativabschnitten des Laufstreifenprofils bereits eine Geräuschreduktion, da die Profilpositive über den Umfang des Fahrzeugluftreifens mit guter Homogenität ausgebildet werden können. Die Ausbildung der Vertiefung mit den beiden sich kreuzenden Längserstreckungsabschnitten ermöglicht darüber hinaus ein besonders großes Oberflächenvolumen zur Wasseraufnahme und dabei ausreichend Griffkanten für Nassbremsen und eine Reduktion von Aquaplaning ohne Ausbildung von durchgehenden Querrillen im Profilpositiv bereitzustellen. Dabei ermöglicht die Ausbildung des ersten Längserstreckungsabschnittes außerhalb seines Kreuzungsbereiches mit dem zweiten Längserstreckungsabschnitt mit einer geringeren Tiefe als die im zweiten Längserstreckungsabschnitt in dessen über die Kreuzung hinweg erstreckten Erstreckungsabschnitt ausgebildet ist, dass durch diese Anhebung des Vertiefungsgrundes die Ausbildung von Instabilitäten an der Kreuzung der beiden Längserstreckungsabschnitte vermieden werden kann. Hierdurch werden die Ausbildung eines besonders regelmäßigen Abriebes und auch eine reduzierte Geräuschbildung zusätzlich begünstigt. Durch die Ausbildung mit von Erstreckungsende bis zur Kreuzung zunehmender Breite kann die Ableitung des Wassers bei Vermeidung von zu großen Sprüngen innerhalb der Profilrippensteifigkeit weiter verbessert werden.

Somit kann durch die Ausbildung des Laufstreifenprofils der Zielkonflikt aus Wasseraufnahme und Wasserableitung einerseits und Geräuschreduktion andererseits ohne aufwendige zusätzliche Maßnahmen auf ein höheres Niveau angehoben und die Ausbildung eines regelmäßigen Abriebs zusätzlich verbessert werden.

Besonders vorteilhaft ist die Ausbildung eines Fahrzeugreifens gemäß den Merkmalen von Anspruch 2, wobei der erste Längserstreckungsabschnitt beiderseits des zweiten Längserstreckungsabschnitts jeweils ausgehend von dem jeweiligen Erstreckungsende des ersten Längserstreckungsabschnitts längs seiner Erstreckung bis zur an der Kreuzung ausgebildeten Einmündung in den zweiten Längserstreckungsabschnitt mit kontinuierlich zunehmender Tiefe ausgebildet ist. Hierdurch kann das Wasser schneller zum tiefsten Bereich der Vertiefung geleitet und Kerbspannungen innerhalb des Profilbandes minimiert verringert werden. Die Steifigkeit wird weiter harmonisiert, wodurch ein gleichmäßigerer Abrieb erreicht wird

Besonders vorteilhaft ist die Ausbildung eines Fahrzeugreifens gemäß den Merkmalen von Anspruch 3, wobei erste Längserstreckungsabschnitt mit einer in seiner Haupterstreckungsrichtung gemessenen, in der radial äußeren Oberfläche ausgebildeten Erstreckungslänge L₁ und der zweite Längserstreckungsabschnitt mit einer in seiner Haupterstreckungsrichtung gemessenen, in der radial äußeren Oberfläche ausgebildeten Erstreckungslänge L₂ ausgebildet ist mit L₁≤ L₂≤ 3L₁. Hierdurch kann der für die Hauptentwässerung wesentliche zweite Längserstreckungsabschnitt hinsichtlich seiner Größe und der durch die Kombination der Ausbildung der beiden Längserstreckungsabschnitte ermöglichte Trichterform für die beschleunigte Ableitung des Wassers weiter optimiert werden.

Besonders vorteilhaft ist die Ausbildung eines Fahrzeugreifens gemäß den Merkmalen von Anspruch 4, wobei der zweite Längserstreckungsabschnitt längs seiner Haupterstreckung aus drei in Erstreckungsrichtung hintereinander angeordneten Abschnitten, nämlich zwei Randabschnitten und einem dazwischen angeordneten mittleren Abschnitt, welcher sich über die Kreuzung hinweg erstreckt, ausgebildet ist, wobei er längs seiner Erstreckung im mittleren Abschnitt mit einer konstanten Tiefe T₂ und in den beiden Randabschnitten mit einer vom jeweiligen Erstreckungsende des zweiten Längserstreckungsabschnitt bis zum mittleren Erstreckungsabschnitt hin kontinuierlich zunehmender Tiefe ausgebildet ist. Hierdurch kann in einfacher Weise die Bereitstellung eines ausreichend großen Mindestvolumens zur Aufnahme von Wasser bereitgestellt werden.

Besonders vorteilhaft ist die Ausbildung eines Fahrzeugreifens gemäß den Merkmalen von Anspruch 5, wobei der zweite Längserstreckungsabschnitt beiderseits des Kreuzung mit dem ersten Längserstreckungsabschnitts jeweils ausgehend von dem jeweiligen Erstreckungsende des zweiten Längserstreckungsabschnitts längs seiner Erstreckung bis zur Kreuzung mit in der radial äußeren Oberfläche kontinuierlich zunehmender Breite ausgebildet ist. Hierdurch kann die Wasserableitung weiter verbessert werden.

Besonders vorteilhaft ist die Ausbildung eines Fahrzeugreifens gemäß den Merkmalen von Anspruch 6, wobei die maximale Tiefe T₁ des ersten Längserstreckungsabschnitts außerhalb der Kreuzung und die maximale Tiefe T₂ des ersten Längserstreckungsabschnitts mit 1mm ≤ T₁≤ (0,5 T₂) ausgebildet sind. Hierdurch kann in einfacher Weise die Steifigkeit ausreichend harmonisiert und ein besonders gleichmäßigerer Abrieb umgesetzt werden.

Besonders vorteilhaft ist die Ausbildung eines Fahrzeugreifens gemäß den Merkmalen von Anspruch 7, wobei derartige Vertiefungen im Profilband in wenigstens zwei unterschiedlichen axialen Positionen ausgebildet sind. Hierdurch können besonders vorteilhafte Verteilungen der Vertiefung zur Erzielung besonders vorteilhafter Ausbildungen hinsichtlich der Geräuschbildung einfach umgesetzt werden.

Besonders vorteilhaft ist die Ausbildung eines Fahrzeugreifens gemäß den Merkmalen von Anspruch 8, wobei die in diesen zwei unterschiedlichen axialen Positionen ausgebildeten Vertiefungen in Umfangsrichtung U zueinander versetzt angeordnet sind. Hierdurch können besonders vorteilhafte Verteilungen der Vertiefung zur Erzielung besonders vorteilhafter Ausbildungen hinsichtlich der Geräuschbildung sowie eine die Einstellung einer gleichmäßigen "Void"-Verteilung - d.h. einer gleichmäßigen Verteilung von Negativ-Anteilen - im Profilband zur verbesserten Ableitung und Aufnahme von Wasser einfach umgesetzt werden.

Besonders vorteilhaft ist die Ausbildung eines Fahrzeugreifens gemäß den Merkmalen von Anspruch 9, wobei die Haupterstreckungsrichtung des ersten Längserstreckungsabschnitts unter Einschluss eines Winkels α zur Umfangsrichtung U des Fahrzeugreifens mit 0°<α<90° - insbesondere mit 30°≤α≤60°- ausgerichtet ist und wobei die Haupterstreckungsrichtung des zweiten Längserstreckungsabschnitts unter Einschluss eines Winkels β zur Umfangsrichtung U des Fahrzeugreifens mit 0°<β<90° - insbesondere mit 30°≤β≤60°- ausgerichtet ist. Dies ermöglicht die einfache Umsetzung einer geräuschoptimierten Ausbildung im betroffenen Profilband.

Die Erfindung wird im Folgenden an Hand der in den Figuren 1 bis 5 dargestellten Ausführungsbeispielen näher erläutert. Hierin zeigen
- Fig.1: einen Umfangsabschnitt eines Profilbandes des Fahrzeugreifens eines Personenkraftwagens (PKW) in Draufsicht,
- Fig.2: das Profilband von Fig.1 in Schnittdarstellung gemäß Schnitt II-II von Fig.1,
- Fig.3: das Profilband von Fig.1 in Schnittdarstellung gemäß Schnitt III-III von Fig.1,
- Fig.4: das Profilband von Fig.1 in perspektivischer Darstellung und
- Fig.5: einen Umfangsabschnitt eines Fahrzeugreifens mit mehreren Profilbändern mit besonderer Ausbildung von Vertiefungen.

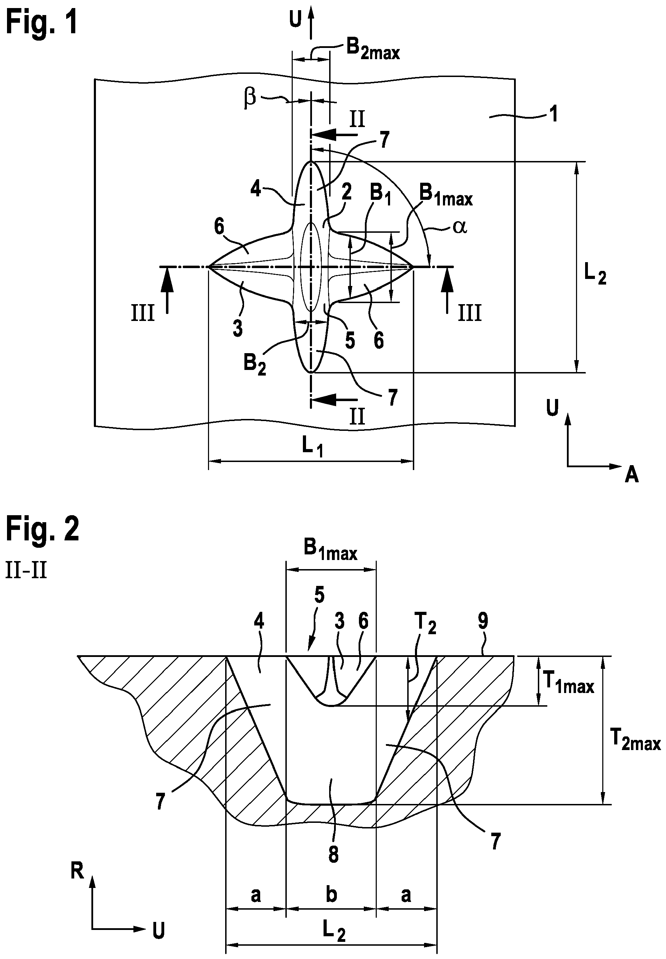

Fig. 1 zeigt einen Abschnitt eines Laufstreifenprofils eines Fahrzeugluftreifens eines Personenkraftwagens (Pkw), bei dem ein Profilband 1 über den gesamten Umfang des Fahrzeugluftreifens erstreckt und in Umfangsrichtung U ausgerichtet ist. Das Profilband 1 ist beispielsweise eine über den gesamten Umfang des Fahrzeugluftreifens erstreckte Umfangsrippe. Das Profilband 1 wird in radialer Richtung R des Fahrzeugluftreifens von einer die Bodenkontaktfläche bildenden, radial äußeren Oberfläche 9 begrenzt. In der radial äußeren Oberfläche 9 des Profilbandes 1 sind über den Umfang des Fahrzeugluftreifens verteilt Vertiefungen 2 ausgebildet, von denen in Fig. 1 eine dargestellt ist.

Die Vertiefung 2 ist in der radial äußeren Oberfläche 9 rundum von Gummimaterial umschlossen und steht somit in keinem direkten Verbindungskontakt zu anderen Vertiefungen, Rillen oder sonstigen Negativanteilen im Profil. Die Vertiefung 2 ist aus zwei sich im Wesentlichen in der Mitte ihrer jeweiligen Erstreckungslänge sich kreuzenden Längserstreckungsabschnitten 3 und 4 ausgebildet.

Der erste Längserstreckungsabschnitt 3 ist mit einer Erstreckungslänge L₁, welche die maximale in der radial äußeren Oberfläche 9 gemessene Erstreckungslänge des längs erstreckten Längserstreckungsabschnitts 3 der Vertiefung 2 bildet und in der Haupterstreckungsrichtung des Längserstreckungsabschnitts 3 ausgebildet ist. Der Längserstreckungsabschnitts 3 ist in der radial äußeren Oberfläche 9 mit einer senkrecht zu Erstreckungslänge L₁ und somit zur Haupterstreckungsrichtung des Längserstreckungsabschnitts 3 ausgebildeten maximalen Erstreckungsbreite B₁ ausgebildet.

Der zweite Längserstreckungsabschnitt 4 ist mit einer Erstreckungslänge L₂, welche die maximale in der radial äußeren Oberfläche 9 gemessene Erstreckungslänge des längs erstreckten Längserstreckungsabschnitts 4 der Vertiefung 2 bildet und in der Haupterstreckungsrichtung des Längserstreckungsabschnitts 4 ausgebildet ist. Der Längserstreckungsabschnitt 4 ist in der radial äußeren Oberfläche 9 mit einer senkrecht zu Erstreckungslänge L₂ und somit zur Haupterstreckungsrichtung des Längserstreckungsabschnitts 4 ausgebildeten maximalen Erstreckungsbreite B₂ ausgebildet.

Die Erstreckungslängen L₁ und L₂ sind dabei mit L₁ ≤ L₂ ≤ 3L₁ ausgebildet. Beispielsweise ist L₂ = 1,2 L₁ gewählt.

Die Erstreckungslänge L₁ ist dabei deutlich größer als B₁ und L₂ deutlich größer als B₂ gewählt.

Die Erstreckungslängen sind dabei beispielsweise mit L₁ ≥ 3mm und 50mm ≥ L₂₂ ≥ 4mm gewählt
Wie in den Figuren 1 und 2 zu erkennen ist, ist die Vertiefung 2 in ihrem zweiten Längserstreckungsabschnitt 4 längs dessen Haupterstreckungsrichtung aus drei hintereinander angeordneten Abschnitten ausgebildet, nämlich einem ersten Randerstreckungsabschnitt 7, einem mittleren Erstreckungsabschnitt 8 und einem anschließenden zweiten Randerstreckungsabschnitt 7. Die Randerstreckungsabschnitte 7 erstrecken sich dabei jeweils von einem der beiden Erstreckungsenden des Längserstreckungsabschnitts 4 ausgehend in Richtung zum mittleren Erstreckungsabschnitt 8. Die beiden Randerstreckungsabschnitte 7 erstrecken sich dabei in der radial äußeren Oberfläche 9 längs der Haupterstreckungsrichtung des zweiten Vertiefungsabschnitts 4 über eine Erstreckungslänge a, der mittlere Erstreckungsabschnitt 8 über eine Erstreckungslänge b. Im mittleren Erstreckungsabschnitt 8 der Länge b ist die Vertiefung längs der Erstreckung des zweiten Erstreckungsabschnittes 4 mit einer im Wesentlichen konstanten Tiefe T₂ₘₐₓ ausgebildet, welche die maximale, in radialer Richtung R des Fahrzeugluftreifens ausgehend von der radial äußeren Oberfläche 9 bis zum Vertiefungsgrund der Vertiefung 2 im zweiten Erstreckungsabschnitt 4 erstreckte Tiefe bildet. In den beiden Randerstreckungsabschnitten 7 ist die Tiefe T₂ des zweiten Längserstreckungsabschnittes 4 der Vertiefung 2 jeweils ausgehend von der Tiefe T₂ₘₐₓ im Übergang zum mittleren Abschnitt 8 längs der Erstreckung des Randerstreckungsabschnittes 7 bis zum jeweiligen Erstreckungsende des zweiten Erstreckungsabschnittes 4 hin kontinuierlich abnehmend - im dargestellten Ausführungsbeispiel von Fig.2 linear abnehmend - ausgebildet und erreicht in der Position des Erstreckungsendes des zweiten Vertiefungsabschnittes 4 jeweils eine Tiefe T₂ = 0. Der mittlere Abschnitt 8 erstreckt sich in Erstreckungsrichtung des zweiten Vertiefungsabschnitts mit seiner Erstreckungslänge b mindestens über den gesamten Erstreckungsabschnitt der Kreuzung 5 der beiden Längserstreckungsabschnitte 4 und 3.

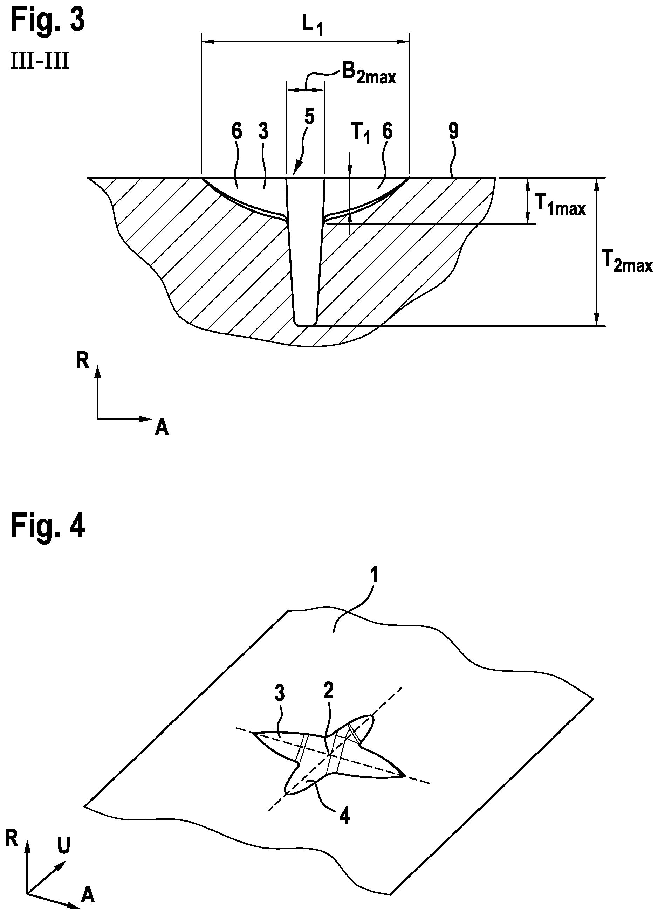

Wie in den Figuren 1 und 3 zu erkennen ist, ist der Längserstreckungsabschnitt 3 außerhalb des Kreuzungsabschnittes mit dem zweiten Erstreckungsabschnitt 4 der Vertiefung 2 jeweils mit einem Erstreckungsabschnitt 6 ausgebildet, welcher sich längs der Erstreckung des ersten Erstreckungsabschnittes 3 jeweils ausgehend von dem jeweiligen Erstreckungsende des ersten Erstreckungsabschnittes 3 bis zur Position erstreckt, wo der erste Erstreckungsabschnitt 3 mit seinem Erstreckungsabschnitt 6 in der Kreuzung 5 in den zweiten Längserstreckungsabschnitt 4 einmündet. Wie in den Figuren 1 und 3 dargestellt ist, sind die beiden Abschnitte 6 des ersten Längserstreckungsabschnittes 3 der Vertiefung 2 dabei ausgehend von der Position dieser Einmündung längs ihrer Haupterstreckungsrichtung bis zum jeweiligen Erstreckungsende des ersten Längserstreckungsabschnittes 3 mit kontinuierlich abnehmender Tiefe T₁ ausgebildet. Dabei ist die Tiefe T₁ in der Position der Einmündung des Abschnittes 6 des ersten Längsertreckungsabschnittes 3 in den zweiten Längserstreckungsabschnitt 4 in der Kreuzung 5 mit ihrer maximalen Tiefe T₁ₘₐₓ ausgebildet und am Erstreckungsende des ersten Längserstreckungsabschnittes 3 mit einer Tiefe T₁ = 0mm ausgebildet.

Wie in Fig.3 dargestellt ist, ist T₂ₘₐₓ > T₁ₘₐₓ ausgebildet. T₂ₘₐₓ und T₁ₘₐₓ sind so gewählt, dass 1mm ≤ T₁ₘₐₓ ≤ (0,5 T₂ₘₐₓ) ausgebildet ist.

Die Tiefe T₂ₘₐₓ ist dabei mit T₂ₘₐₓ ≤ P_{T} ausgebildet, wobei P_{T} die maximale Profiltiefe des Reifens darstellt. Beispielsweise ist P_{T} mit 6mm ≤ P_{T}≤ 9mm an einem Pkw gewählt.

Wie in Fig. 3 deutlich zu erkennen ist, ist über die Kreuzung 5 hinweg auch längs der Haupterstreckung des ersten Längserstreckungsabschnitts 3 der Vertiefung 2 der Tiefenverlauf des zweiten Längserstreckungsabschnittes 4 der Vertiefung 2 maßgeblich und der Übergang der jeweiligen Erstreckungsabschnitte 6 des ersten Längserstreckungsabschnitt 3 in die Kreuzung 5 ist mit einer sprunghaften Vergrößerung der Tiefe von T₁ₘₐₓ zu T₂ₘₐₓ umgesetzt.

Wie in Fig. 1 zu erkennen ist, ist der zweite Längserstreckungsabschnitt 4 der Vertiefung 2 in beiden Erstreckungshälften jeweils ausgehend vom Erstreckungsende bis zur Kreuzung mit kontinuierlich zunehmender Breite B₂, welche in der radial äußeren Oberfläche 9 gemessen wird, ausgebildet. Ebenso ist der erste Längserstreckungsabschnitt 3 zu beiden Erstreckungshälften jeweils ausgehend vom Erstreckungsende bis zur Kreuzung 5 mit einer kontinuierlich zunehmenden, in der radial äußeren Oberfläche 9 gemessenen Breite B₁ ausgebildet. Der erste Erstreckungsabschnitt 3 erreicht dabei seine größte Erstreckungsbreite B₁ₘₐₓ an der Position der Einmündung in den zweiten Längserstreckungsabschnitt 4 und der zweite Längserstreckungsabschnitt 4 erreicht seine maximale Breite B₂ ebenfalls an seiner Schnittposition mit dem ersten Längserstreckungsabschnitt 3 in der radial äußeren Oberfläche 9.

Die maximale Erstreckungsbreite B₁ₘₐₓ ist mit B₁ₘₐₓ < 0,5(L₁ - B₂ₘₐₓ) ausgebildet. Die maximale Erstreckungsbreite B₂ ist B₂ₘₐₓ ≤ B₁ₘₐₓ ausgebildet.

In einem Ausführungsbeispiel sind die Größen B₁ₘₐₓ, B₂ₘₐₓ, L₁, L₂, T₁ₘₐₓ und T₂ₘₐₓ mit B₁ₘₐₓ = 30mm, B₂ₘₐₓ = 4mm, L₁ =3mm, L₂= 5mm, T₁ₘₐₓ = 4mm und T₂ₘₐₓ = 8mm gewählt.

In den Figuren 1 und 4 ist ein Ausführungsbeispiel dargestellt, bei dem die Längserstreckungsrichtung des zweiten Längserstreckungsabschnittes 4 unter Einschluss eines Neigungswinkels β zur Umfangsrichtung U und die Längserstreckungsrichtung des ersten Längserstreckungsabschnittes 3 unter Einschluss eines Einschlusswinkels α zur Umfangsrichtung ausgerichtet ist. In den Figuren 1 und 4 ist dabei ein Ausführungsbeispiel dargestellt, bei welchem β = 0° und α = 90° gewählt ist.

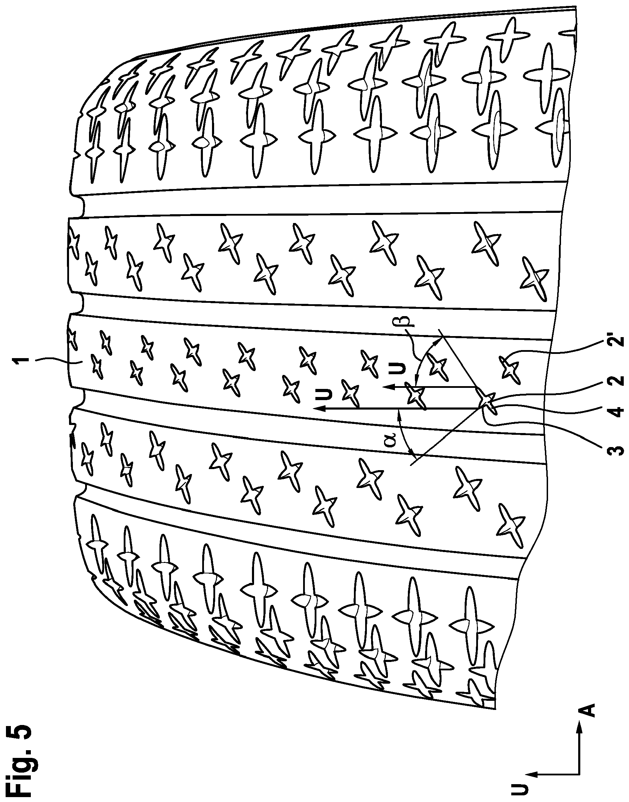

In einer anderen - beispielsweise in Fig.5 dargestellten - Ausführung ist der Winkel α mit 30° ≤ α≤ 60° und der Winkel β mit 30° ≤ β ≤ 60° ausgebildet. Beispielsweise ist α = 45° und β = 45° gewählt.

Fig. 5 zeigt einen Abschnitt eines Laufstreifenprofils eines Fahrzeugluftreifens mit mehreren in axialer Richtung A des Fahrzeugluftreifens durch Umfangsrillen voneinander beabstandeten Profilbändern 1, welche im dargestellten Ausführungsbeispiel als Umfangsrippen ausgebildet sind. Fig.5 zeigt dabei ein Ausführungsbeispiel mit drei zentralen Umfangsrippen und mit beiderseits dieser zentralen Umfangsrippen am axialen Erstreckungsrand des Fahrzeugreifens jeweils einer Schulterumfangsrippe bekannter Art. Fig. 5 zeigt ein Ausführungsbeispiel, bei welchem in einem Profilband 1 Vertiefungen 2 in unterschiedlicher, axialer Position ausgebildet sind. Im dargestellten Ausführungsbeispiel sind dabei Vertiefungen 2 in einer ersten axialen Position und analog ausgebildete Vertiefungen 2` in einer davon abweichenden axialen Position ausgebildet.

Fig. 5 zeigt darüber hinaus ein weiteres Ausführungsbeispiel, bei welchem in Umfangsrichtung U des Fahrzeugluftreifens über den Umfang des Fahrzeugluftreifens hinweg jeweils Vertiefungen 2 und Vertiefungen 2` in alternierender Abfolge in Umfangsrichtung U des Fahrzeugluftreifens versetzt hintereinander angeordnet sind.

### Bezugszeichenliste

- 1: Profilband
- 2: Vertiefung
- 3: Erster Längserstreckungsabschnitt
- 4: Zweiter Längserstreckungsabschnitt
- 5: Kreuzung
- 6: Abschnitt
- 7: Abschnitt
- 8: Abschnitt
- 9: Radial äußere Oberfläche

## Patentansprüche

1. Laufstreifenprofil eines Fahrzeugreifens mit wenigstens einem Profilband (1), welches nach radial außen von einer die Straßenkontaktoberfläche bildenden radial äußeren Oberfläche (9) begrenzt wird, mit in der radial äußeren Oberfläche (9) des Profilbandes (1) ausgebildeten Vertiefungen (2), die in der radial äußeren Oberfläche (9) vollständig von Gummimaterial des Profilbandes (1) umschlossen sind, mit Vertiefungen (2), die aus zwei sich kreuzenden Längserstreckungsabschnitten (3,4) ausgebildet sind,
wobei der erste (3) der beiden Längserstreckungsabschnitte außerhalb seines Kreuzungsbereichs (5) mit dem zweiten Längserstreckungsabschnitt (4) mit einer geringeren Tiefe ausgebildet ist als der zweite Längserstreckungsabschnitt (4) in dessen über die Kreuzung (5) hinweg erstrecktem Erstreckungsabschnitt
**dadurch gekennzeichnet,**
**dass** der erste Längserstreckungsabschnitt (3) beiderseits des zweiten Längserstreckungsabschnitts (4) jeweils ausgehend von dem jeweiligen Erstreckungsende des ersten Längserstreckungsabschnitts (3) längs seiner Erstreckung bis zur an der Kreuzung (5) ausgebildeten Einmündung in den zweiten Längserstreckungsabschnitt (4) mit in der radial äußeren Oberfläche (9) kontinuierlich zunehmender Breite ausgebildet ist.

2. Laufstreifenprofil gemäß den Merkmalen von Anspruch 1,
wobei der erste Längserstreckungsabschnitt (3) beiderseits des zweiten Längserstreckungsabschnitts (4) jeweils ausgehend von dem jeweiligen Erstreckungsende des ersten Längserstreckungsabschnitts (3) längs seiner Erstreckung bis zur an der Kreuzung (5) ausgebildeten Einmündung in den zweiten Längserstreckungsabschnitt (4) mit kontinuierlich zunehmender Tiefe ausgebildet ist.

3. Laufstreifenprofil gemäß den Merkmalen von einem der vorangegangenen Ansprüche,
wobei erste Längserstreckungsabschnitt (3) mit einer in seiner Haupterstreckungsrichtung gemessenen, in der radial äußeren Oberfläche (9) ausgebildeten Erstreckungslänge L₁ und der zweite Längserstreckungsabschnitt (4) mit einer in seiner Haupterstreckungsrichtung gemessenen, in der radial äußeren Oberfläche (9) ausgebildeten Erstreckungslänge L₂ ausgebildet ist mit L₁≤ L₂≤ 3L₁.

4. Laufstreifenprofil gemäß den Merkmalen von einem der vorangegangenen Ansprüche,
wobei der zweite Längserstreckungsabschnitt (4) längs seiner Haupterstreckung aus drei in Erstreckungsrichtung hintereinander angeordneten Abschnitten, nämlich zwei Randabschnitten (7) und einem dazwischen angeordneten mittleren Abschnitt (8), welcher sich über die Kreuzung (5) hinweg erstreckt, ausgebildet ist, wobei er längs seiner Erstreckung im mittleren Abschnitt (8) mit einer konstanten Tiefe T₂ und in den beiden Randabschnitten (7) mit einer vom jeweiligen Erstreckungsende des zweiten Längserstreckungsabschnitt (4) bis zum mittleren Erstreckungsabschnitt (8) hin kontinuierlich zunehmender Tiefe ausgebildet ist.

5. Laufstreifenprofil gemäß den Merkmalen von einem der vorangegangenen Ansprüche,
wobei der zweite Längserstreckungsabschnitt (4) beiderseits des Kreuzung (5) mit dem ersten Längserstreckungsabschnitts (3) jeweils ausgehend von dem jeweiligen Erstreckungsende des zweiten Längserstreckungsabschnitts (4) längs seiner Erstreckung bis zur Kreuzung (5) mit in der radial äußeren Oberfläche (9) kontinuierlich zunehmender Breite ausgebildet ist.

6. Laufstreifenprofil gemäß den Merkmalen von einem der vorangegangenen Ansprüche,
wobei die maximale Tiefe T₁ des ersten Längserstreckungsabschnitts (3) außerhalb der Kreuzung (5) und die maximale Tiefe T₂ des ersten Längserstreckungsabschnitts (3) mit 1mm ≤ T₁≤ (0,5 T₂) ausgebildet sind.

7. Laufstreifenprofil gemäß den Merkmalen von einem der vorangegangenen Ansprüche,
wobei derartige Vertiefungen (2,2') im Profilband (1) in wenigstens zwei unterschiedlichen axialen Positionen ausgebildet sind.

8. Laufstreifenprofil gemäß den Merkmalen von Anspruch 7,
wobei die in diesen zwei unterschiedlichen axialen Positionen ausgebildeten Vertiefungen (2,2') in Umfangsrichtung U zueinander versetzt angeordnet sind.

9. Laufstreifenprofil gemäß den Merkmalen von einem der vorangegangenen Ansprüche,
wobei die Haupterstreckungsrichtung des ersten Längserstreckungsabschnitts (3) unter Einschluss eines Winkels α zur Umfangsrichtung U des Fahrzeugreifens mit 0°<α<90° - insbesondere mit 30°≤α≤60°- ausgerichtet ist und wobei die Haupterstreckungsrichtung des zweiten Längserstreckungsabschnitts (4) unter Einschluss eines Winkels β zur Umfangsrichtung U des Fahrzeugreifens mit 0°<β<90° - insbesondere mit 30°≤β≤60°- ausgerichtet ist.

## Claims

1. Tread profile of a vehicle tyre having at least one profiled strip (1), which is delimited radially outwardly by a radially outer surface (9) forming the road contact surface, having depressions (2) which are formed in the radially outer surface (9) of the profiled strip (1) and are fully enclosed in the radially outer surface (9) by rubber material of the profiled strip (1), having depressions (2) which are formed by two intersecting portions of longitudinal extent (3, 4), the first (3) of the two portions of longitudinal extent being formed with a shallower depth outside its region of intersection (5) with the second portion of longitudinal extent (4) than the second portion of longitudinal extent (4) in its portion of extent extending beyond the intersection (5),
**characterized**
**in that** the first portion of longitudinal extent (3) is formed with a continuously increasing width in the radially outer surface (9) on both sides of the second portion of longitudinal extent (4), in each case from the respective end of extent of the first portion of longitudinal extent (3) along its extent to where it merges into the second portion of longitudinal extent (4), formed at the intersection (5).

2. Tread profile according to the features of Claim 1,
the first portion of longitudinal extent (3) being formed with a continuously increasing depth on both sides of the second portion of longitudinal extent (4), in each case from the respective end of extent of the first portion of longitudinal extent (3) along its extent to where it merges into the second portion of longitudinal extent (4), formed at the intersection (5).

3. Tread profile according to the features of one of the preceding claims,
the first portion of longitudinal extent (3) being formed with a length of extent L₁, measured in its main direction of extent and formed in the radially outer surface (9), and the second portion of longitudinal extent (4) being formed with a length of extent L₂, measured in its main direction of extent and formed on the radially outer surface (9), such that L₁≤L₂≤3L₁.

4. Tread profile according to the features of one of the preceding claims,
the second portion of longitudinal extent (4) being formed along its main extent by three portions arranged one behind the other in the direction of extent, specifically two edge portions (7) and one middle portion (8) arranged in between, which extends over the intersection (5), it being formed in the middle portion (8) with a constant depth T₂ along its extent and formed in the two edge portions (7) with a continuously increasing depth, from the respective end of extent of the second portion of longitudinal extent (4) to the middle portion of extent (8).

5. Tread profile according to the features of one of the preceding claims,
the second portion of longitudinal extent (4) being formed with a continuously increasing width in the radially outer surface (9) on both sides of the intersection (5) with the first portion of longitudinal extent (3), in each case from the respective end of extent of the second portion of longitudinal extent (4) along its extent to the intersection (5).

6. Tread profile according to the features of one of the preceding claims,
the maximum depth T₁ of the first portion of longitudinal extent (3) outside the intersection (5) and the maximum depth T₂ of the first portion of longitudinal extent (3) being formed such that 1 mm≤T₁≤(0.5 T₂).

7. Tread profile according to the features of one of the preceding claims,
such depressions (2, 2') being formed in the profiled strip (1) in at least two different axial positions.

8. Tread profile according to the features of Claim 7,
the depressions (2, 2') that are formed in these two different axial positions being arranged offset in relation to one another in the circumferential direction U.

9. Tread profile according to the features of one of the preceding claims,
the main direction of extent of the first portion of longitudinal extent (3) being aligned to include an angle α in relation to the circumferential direction U of the vehicle tyre such that 0°<α<90° - in particular such that 30°≤α≤60° - and the main direction of extent of the second portion of longitudinal extent (4) being aligned to include an angle *β* in relation to the circumferential direction U of the vehicle tyre such that 0°<β<90° - in particular such that 30°≤β≤60°.

## Revendications

1. Profil de bande de roulement d'un pneu de véhicule avec au moins une bande profilée (1), qui est délimitée radialement vers l'extérieur par une surface radialement extérieure (9) formant la surface de contact avec la route, avec des creux (2) formés dans la surface radialement extérieure (9) de la bande profilée (1), qui, dans la surface radialement extérieure (9), sont entièrement entourés par le matériau de caoutchouc de la bande profilée (1), avec des creux (2) qui sont formées par deux sections d'extension longitudinale (3, 4) qui se croisent,
la première (3) des deux sections d'extension longitudinale étant formée, en dehors de sa zone de croisement (5) avec la deuxième section d'extension longitudinale (4), avec une profondeur inférieure à celle de la deuxième section d'extension longitudinale (4) dans sa section d'extension s'étendant au-delà du croisement (5),
**caractérisé en ce que**
la première section d'extension longitudinale (3) est formée de part et d'autre de la deuxième section d'extension longitudinale (4), respectivement à partir de l'extrémité d'extension respective de la première section d'extension longitudinale (3), le long de son extension jusqu'à l'embouchure formée au niveau du croisement (5) dans la deuxième section d'extension longitudinale (4), avec une largeur augmentant en continu dans la surface radialement extérieure (9).

2. Profil de bande de roulement selon les caractéristiques de la revendication 1, dans lequel la première section d'extension longitudinale (3) est formée de part et d'autre de la deuxième section d'extension longitudinale (4), respectivement à partir de l'extrémité d'extension respective de la première section d'extension longitudinale (3), le long de son extension jusqu'à l'embouchure formée au niveau du croisement (5) dans la deuxième section d'extension longitudinale (4), avec une profondeur augmentant en continu.

3. Profil de bande de roulement selon les caractéristiques de l'une quelconque des revendications précédentes,
dans lequel la première section d'extension longitudinale (3) est formée avec une longueur d'extension L₁, mesurée dans sa direction d'extension principale, formée dans la surface radialement extérieure (9), et la deuxième section d'extension longitudinale (4) avec une longueur d'extension L₂, mesurée dans sa direction d'extension principale, formée dans la surface radialement extérieure (9), avec L₁ ≤ L₂ ≤ 3L₁.

4. Profil de bande de roulement selon les caractéristiques de l'une quelconque des revendications précédentes,
dans lequel la deuxième section d'extension longitudinale (4) est formée, le long de son extension principale, de trois sections agencées les unes derrière les autres dans la direction d'extension, à savoir deux sections de bord (7) et une section centrale (8) agencée entre elles, qui s'étend au-delà du croisement (5), celle-ci étant formée le long de son extension dans la section centrale (8) avec une profondeur constante T₂ et dans les deux sections de bord (7) avec une profondeur augmentant en continu depuis l'extrémité d'extension respective de la deuxième section d'extension longitudinale (4) jusqu'à la section d'extension centrale (8).

5. Profil de bande de roulement selon les caractéristiques de l'une quelconque des revendications précédentes,
dans lequel la deuxième section d'extension longitudinale (4) est formée de part et d'autre du croisement (5) avec la première section d'extension longitudinale (3), respectivement à partir de l'extrémité d'extension respective de la deuxième section d'extension longitudinale (4), le long de son extension jusqu'au croisement (5), avec une largeur augmentant en continu dans la surface radialement extérieure (9).

6. Profil de bande de roulement selon les caractéristiques de l'une quelconque des revendications précédentes,
dans lequel la profondeur maximale T₁ de la première section d'extension longitudinale (3) en dehors du croisement (5) et la profondeur maximale T₂ de la première section d'extension longitudinale (3) sont formées avec 1 mm ≤ T₁ ≤ (0,5 T₂).

7. Profil de bande de roulement selon les caractéristiques de l'une quelconque des revendications précédentes,
dans lequel de tels creux (2, 2') sont formés dans la bande profilée (1) en au moins deux positions axiales différentes.

8. Profil de bande de roulement selon les caractéristiques de la revendication 7, dans lequel les creux (2, 2') formés en ces deux positions axiales différentes sont agencés en décalage l'un par rapport à l'autre dans la direction circonférentielle U.

9. Profil de bande de roulement selon les caractéristiques de l'une quelconque des revendications précédentes,
dans lequel la direction d'extension principale de la première section d'extension longitudinale (3) est orientée en formant un angle α par rapport à la direction circonférentielle U du pneu de véhicule de 0° < α < 90° - notamment de 30° < α < 60° - et dans lequel la direction d'extension principale de la deuxième section d'extension longitudinale (4) est orientée en formant un angle β par rapport à la direction circonférentielle U du pneu de véhicule de 0° < β < 90° - notamment de 30° < β < 60°.
